Europäisches Patentamt

European Patent Office

Office européen des brevets

(11) Numéro de publication: **0 198 986**
**B1**

# (12) FASCICULE DE BREVET EUROPÉEN

(45) Date de publication du fascicule du brevet:
15.11.89

(51) Int. Cl.⁴: **H 02 K 21/14**

(21) Numéro de dépôt: **85401425.5**

(22) Date de dépôt: **12.07.85**

(54) **Machine électrodynamique synchrone hexapolaire à aimants permanents.**

(30) Priorité: **23.04.85 FR 8506143**

(43) Date de publication de la demande:
**29.10.86 Bulletin 86/44**

(45) Mention de la délivrance du brevet:
**15.11.89 Bulletin 89/46**

(84) Etats contractants désignés:
**CH DE FR GB IT LI NL SE**

(56) Documents cité:
**EP-A-0 107 317**
**EP-A-0 121 573**
**EP-A-0 128 961**
**GB-A-2 135 832**

(73) Titulaire: **TELEMECANIQUE, 43-45, Boulevard Franklin Roosevelt, F-92504 Rueil-Malmaison Cedex (FR)**

(72) Inventeur: **Banon, Louis, 319, rue Lecourbe, F-75015 Paris (FR)**
Inventeur: **Lajoie-Mazenc, Michel, Lotissement de la Tout Pompertuzat, F-31450 Montgiscard (FR)**
Inventeur: **Mathieu, Pierre, 22, rue de Beauvoir, F-45100 Olivet (FR)**

(74) Mandataire: **de Saint-Palais, Arnaud Marie, CABINET MOUTARD 35, Avenue Victor Hugo, F-78990 Voisins le Bretonneux (FR)**

EP 0 198 986 B1

## Description

La présente invention est relative à une machine synchrone à aimants permanents a fort couple massique employant des tôles ordinaires.

Les machines synchrones à aimants permanents intéressent les fabricants d'automatismes industriels notamment de machines outils, robots ou manipulateurs. Grâce à l'absence de contacts glissants (balais, charbons, bagues, collecteurs) elles ne nécessitent aucune maintenance et ont une longévité égale à celle de leurs roulements. Elles constituent donc un progrès dans l'augmentation de la productivité et de la rentabilité des équipements industriels.

Cependant, jusqu'à présent, les machines synchrones à aimants permanents dites performantes sont limitées quant à leurs rapports prix/couple massique ou prix/puissance massique.

On observait en effet deux grandes catégories de ces machines:

- premièrement les machines à aimants du type à haute énergie (terres rares)utilisant des tôles ordinaires (ferro-silicium) mais dont la masse est difficilement compatible à une intégration dans un axe d'automatisme embarqué, sans pénaliser l'automatisme par augmentation du poids, et nécessite donc de recourir à des machines de performances plus élevées et donc encore plus lourdes et plus coûteuses. Les spécialistes d'automatismes préfèrent dans ce cas reporter la machine en dehors de l'articulation au prix d'une transmission plus compliquée et donc d'une maintenance accrue;
- deuxièmement les machines à aimants du type à haute énergie (terres rares)utilisant des tôles performantes, notamment (ferro-cobalt). Les performances en couple et puissance massiques sont alors bonnes et permettent une intégratien plus aisée, mais au prix d'un coût de machine considérablement élevé, et d'utilisation plus délicate due aux problèmes suivants:

. les tôles performantes notamment ferro-cobalt ont un coût en matière de 60 à 100 fois supérieur à celui des tôles ordinaires;
. les tôles ferro-cobalt sont beaucoup moins résistives que les tôles ordinaires. Elles ont des pertes massiques pour une épaisseur donnée, très supérieures a celles des tôles ordinaires. On est de ce fait conduit à choisir des tôles d'épaisseur très faible (0,1 à 0,2 mm). Les différentes opérations de matriçage sont alors plus délicates et impliquent des pertes accrues notamment par déformation par rapport au matriçage de tôles ordinaires;
. a la différence des tôles ordinaires, les tôles ferro-cobalt nécessitent pour conserver les performances magnétiques une opération de recuit à haute température engendrant des coûts supplémentaires de production et une diminution du rendement de production, notamment par déformation pendant le recuit et les manipulations;
. les pertes magnétiques notables existant ans les tôles ferro-cobalt nécessitent souvent, pour conserver les performances massiques de la machine, de recourir à un refroidissement forcé de la machine (ventilation, circulation d'un fluide) qui n'est pas compatible avec toutes les applications, ce qui augmente la maintenance et les risques d'incidents.

La machine synchrone à aimants permanents, selon l'invention, se range dans la première catégorie par son prix et dans la seconde catégorie par ses performances massiques même en refroidissement naturel.

Dans les machines électriques connues, l'état de l'art veut que les culasses de flux et les dents statoriques travaillent en régime magnétique linéaire pour les raisons suivantes:

- minimisation des pertes magnétiques fonction du carré de l'induction;
- possibilité d'utiliser les modèles de dimensionnement classiques faisant l'hypothèse d'un fer de perméabilité infinie (diagrammes de Behn Eschenburg pour les machines à poles lisses, de Blondel pour les machines à poles saillants);
- tôles magnétiques caractérisées par les constructeurs seulement jusqu'à 1,7 Tesla.

L'invention réside dans l'amélioration des performances massiques de structures électromagnétiques connues grâce à une saturation magnétique élevée des dents et culasses en tôles ordinaires (ferro-silicium) en conservant à la machine des pertes magnétiques acceptables et sensiblement constantes en charge ou a vide.

Dans ce but, l'invention propose une machine électro-dynamique synchrone hexapolaire à aimants permanents comportant un rotor du type à concentration de flux comprenant un arbre réalisé en matériau amagnétique sur lequel reposent six aimants permanents radiaux parallélépipédiques du type à haute énergie entre lesquels sont disposées les pièces polaires réalisées en tôle magnétique ferro-silicium et un stator comportant une carcasse réalisée en tôle magnétique ferro-silicium dans laquelle sont formées une pluralité d'encoches semi-fermées délimitées par une culasse statorique qui reçoivent des bobinages induits, et qui définit avec le rotor un entrefer, caractérisée en ce que le rapport $r_1$ de la hauteur de la section d'un aimant traversée par le flux d'induction divisée par le diamètre d'alésage de l'entrefer est compris entre 0,281 et 0,344.

Selon d'autres caractéristiques de l'invention, le rapport $r_2$ de la longueur d'un demi-arc polaire périphérique du rotor séparant les faces en vis-à-vis de deux aimants consécutifs, divisée par la hauteur de la section d'un aimant traversée par le flux d'induction, est compris entre 0,588 et 0,741. Le rapport $r_3$ entre le produit du nombre de dents statoriques séparant les encoches statoriques multiplié par l'épaisseur d'une dent statorique séparant deux encoches consécutives, divisé par douce fois la longueur d'un demi-arc polaire périphérique du rotor séparant les faces en vis-à-vis de deux aimants consécutifs est compris entre 0,55 et 0,70. Enfin le rapport $r_4$ de douze fois l'épaisseur radiale de la culasse statorique divisé par le produit du nombre de dents statoriques séparant les encoches statoriques multiplié par l'épaisseur d'une dent statorique séparant deux encoches consécutives est compris entre 0,75 et 0,90.

On vient ainsi de définir une série de rapports de dimensionnement $r_1$ à $r_4$ qui permettent, à partir du choix initial d'un diamètre d'alésage d de déterminer l'ensemble des dimensions de la machine permettant d'obtenir une puissance ou un couple massiques maximum avec l'utilisation de tôles magnétiques ordinaires et d'aimants à haute énergie.

Les rapports qui viennent d'être définis permettent également par une simple homothétie de transposer la structure magnétique saturée idéale à différentes gammes de puissance.

On décrira maintenant l'invention en se référant aux dessins annexés dans lesquels:

- la figure 1 est une vue en coupe axiale d'une machine électro-dynamique synchrone et

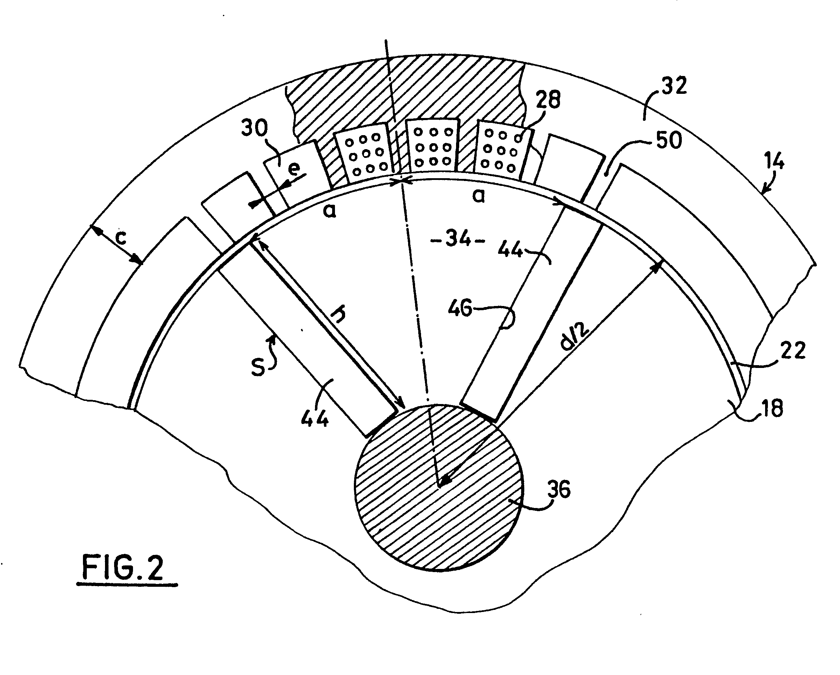

- la figure 2 est une vue schématique en coupe transversale du rotor et de la carcasse d'une machine électro-dynamique réalisée conformément aux enseignements de la présente invention.

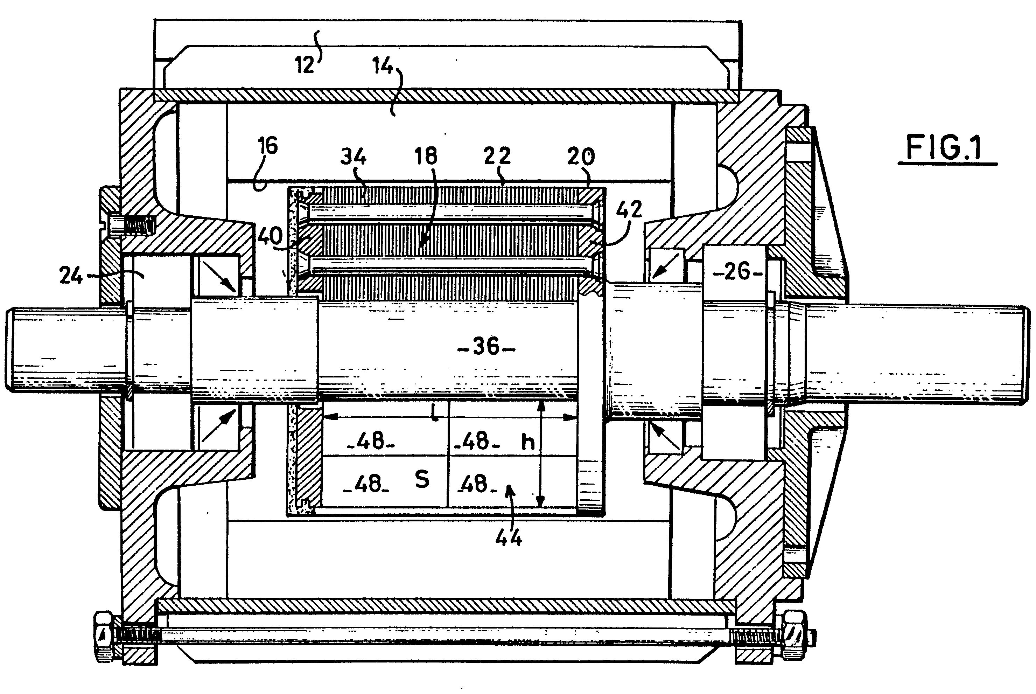

On a représenté à la figure 1 une coupe axiale d'un moteur synchrone. La structure de ce moteur est similaire à celle du moteur décrit et représenté dans la demande de brevet européen publiée sous le n° 0 093 041 A1 au contenu de laquelle on pourra avantageusement se reporter.

Le moteur comprend essentiellement un carter 12 dans lequel est monté un stator 14 dont la paroi périphérique interne 16 coopère avec la paroi périphérique externe 20 d'un rotor 18 monté dans le carter 12 pour définir entre elles un entrefer 22. Le rotor 18 est monte tournant dans le carter 12 au moyen de deux paliers 24 et 26 comportant chacun un roulement.

Le stator 14 représenté aux figures comprend un enroulement principal de stator 28 disposé dans des encoches 30 semi-fermées délimitées par une culasse statorique 32.

Le rotor 18 représenté aux figures est constitué par un empilement de tôles magnétiques 34 enfilées sur un arbre amagnétique 36 et maintenues serrées par des tirants 38 entre deux flasques amagnétiques 40 et 42.

Le rotor 18 comprend également des aimants 44 montes dans des encoches radiales 46. Le maintien des aimants 44 dans les encoches 46 est obtenu grâce à des éléments rapportés 48 dans des évidements formés aux extrémités des encoches 46 ce mode de fixation des aimants est illustré en détail à la figure 3 de la demande de brevet européen 0 093 041 A1.

Dans le cadre de la présente invention, les tôles magnétiques dans lesquelles sont réalisées les pièces polaires 34 et la culasse 32 sont des tôles ordinaires en alliage de ferro-silicium.

Chacun des six aimants du rotor hexapolaire a une forme générale parallélépipédique rectangle et prend appui sur l'arbre amagnétique 36.

Les aimants utilisés sont des aimants à haute énergie c'est-à-dire en l'occurence des aimants possédant dès caractéristiques magnétiques équivalentes à celles des aimants réalisés à partir de terres rares. Dans le mode de réalisation présenté, les aimants sont réalisés en samarium-cobalt et sont chacun constitués d'une pluralité d'aimants élémentaires parallélépipédiques 48 assemblés entre eux et ce pour des facilités de fabrication.

Chaque aimant est aimanté tangentiellement, c'est-à-dire que les lignes de flux sortant par une section latérale S d'un aimant sont sensiblement perpendiculaires aux rayons du rotor.

Conformément à l'invention et afin d'obtenir la saturation magnétique maximale la machine électro-dynamique est dimensionnée de façon que le rapport $r_1$ défini par la formule

$$r_1 = \frac{h}{d}$$

dans laquelle

- h est la hauteur radiale de la section S d'un aimant 44 traversée par le flux d'induction, et
- d est le "diamètre d'alésage" ou diamètre moyen de l'entrefer 22 de la machine électrodynamique, est compris entre 0,281 et 0,344.

Selon un mode de réalisation préféré de l'invention, le rapport $r_1$ es t égal à 0,3125.
Selon une autre caractéristique de l'invention, le rapport $r_2$ défini par la formule

$$r_2 = \frac{a}{h}$$

dans laquelle

- a est la longueur d'un demi-arc polaire périphérique externe du rotor 18 séparant les faces 5 en vis-à-vis de deux aimants consécutifs 44, est compris entre 0,588 et 0,741.

Selon un mode de réalisation préféré de l'invention, le rapport $r_2$ est égal à 0,658.
Selon une autre caractéristique de l'invention, le rapport r3 défini par la formule

$$r_3 = \frac{n \times e}{12 \times a}$$

dans laquelle
- n est le nombre de dents statoriques 50 séparant les encoches statoriques 30, et
- e est l'épaisseur d'une dent statorique 50 séparant deux encoches statoriques consécutives 30, est compris entre 0,55 et 0,70.
Selon un mode de réalisation préféré de l'in-

vention, le rapport $r_3$ est égal à 0,62, le nombre de dents statoriques 50 étant égal à trente-six (36).

Selon une autre caractéristique de l'invention, le rapport $r_4$ défini par la formule

$$r_4 = \frac{12 \times c}{n \times e}$$

dans laquelle

- c est l'épaisseur radiale de la culasse statorique 32 délimitant les encoches statoriques 30, est compris entre 0,75 et 0,90.

Selon un mode de réalisation préféré de l'invention, le rapport $r_4$ est égal à 0,824.

Outre les qualités de prix, de couple et de puissance massiques, l'invention présente les avantages suivants:
- le rotor possède une faible inertie et un couple impulsionnel élevé d'où découlent des accélérations théoriques élevées;
- du fait de la saturation élevée des tôles, les inductances de la machine sont faibles et par conséquent la constante de temps électrique est faible permettant une installation très rapide du courant donc du couple. Ce phénomène est intéressant dans les applications à hautes fréquences et à faibles vitesses;
- du fait de la saturation élevée même à vide, les inductances de la machine varient peu en fonction du courant permettant ainsi une maîtrise de la fréquence de découpage de l'électronique d'alimentation;
- la machine est à poles saillants par conception mais du fait de la saturation élevée des tôles, la saillance est faible. On en déduit que le couple de réluctance de la machine est faible. Cela a deux conséquences:
- a) la loi de couple maximal en fonction du courant est quasi linéaire jusqu'à des valeurs de couple très élevées (5 à 6 fois le couple nominal);
- b) l'angle de calage entre le flux et le courant au couple maximal est sensiblement constant, ce qui facilite l'électronique de commande de la machine.

## Revendications

1. Machine électro-dynamique synchrone hexapolaire à aimants permanents (44) comportant un rotor (18) du type à concentration de flux comprenant un arbre (36) réalisé en matériau amagnétique sur lequel reposent six aimants permanents radiaux parallélépipédiques (44) du type à haute énergie entre lesquels sont disposées les pièces polaires (34) réalisées en tôle magnétique ferro-silicium et un stator (14) comportant une carcasse réalisée en tôle magnétique ferro-silicium dans laquelle sont formées une pluralité d'encoches semi-fermées (30) délimitées par une culasse statorique (32) qui reçoivent des bobinages induits (28), et qui définit avec le rotor (18) un entrefer (22), caractérisée en ce que le rapport $r_1$ de la hauteur (h) de la section d'un aimant traversée par le flux d'induction divisée par le diamètre d'alésage (d) de l'entrefer est compris entre 0,281 et 0,344.

2. Machine selon la revendication 1, caractérisée en ce que le rapport $r_1$ est égal à 0,3125.

3. Machine selon l'une des revendications 1 ou 2, caractérisée en ce que le rapport $r_2$ de la longueur (a) d'un demi-arc polaire périphérique du rotor séparant les faces en vis-à-vis de deux aimants consécutifs, divisée par la hauteur (h) de la section d'un aimant traversée par le flux d'induction est compris entre 0,588 et 0,741.

4. Machine selon la revendication 3, caractérisée en ce que le rapport $r_2$ est égal à 0,658.

5. Machine selon l'une des revendications 1 à 4, caractérisée en ce que le rapport $r_3$ entre le produit du nombre de dents statoriques (n) séparant les encoches statoriques multiplié par l'épaisseur d'une dent statorique (e) séparant deux encoches consécutives, divisé par douze fois la longueur (a) d'un demi-arc polaire périphérique du rotor séparant les faces en vis-à-vis de deux aimants consécutifs est compris entre 0,55 et 0,70.

6. Machine selon la revendication 5, caractérisée en ce que le rapport $r_3$ est égal à 0,62.

7. Machine selon l'une quelconque des revendications 1 à 6, caractérisée en ce que le rapport $r_4$ de douze fois l'épaisseur radiale (c) de la culasse statorique divisé par le produit du nombre (n) de dents statoriques séparant les encoches statoriques multiplié par l'épaisseur (e) d'une dent statorique séparant deux encoches consécutives est compris entre 0,75 et 0,90.

8. Machine selon la revendication 7, caractérisée en ce que le rapport $r_4$ est égal à 0,824.

9. Machine selon l'une quelconque des revendications 1 à 8, caractérisée en ce que le nombre de dents statoriques (n) séparant les encoches statoriques est égal à 36.

## Patentansprüche

1. Sechspolige elektrodynamische Synchronmaschine mit Dauermagneten (44), mit einem Rotor (18) des Flusskonzentrationstyps, welcher eine Achse (36) aus nicht magnetischem Material aufweist, auf der sechs radiale parallelepipede Starkenergie-Dauermagneten (44) ruhen, zwischen denen die Polteile (34) aus magnetischem Ferrosiliziumblech angeordnet sind und einem Stator (14), welcher einen Rahmen aus magnetischem Ferrosiliziumblech aufweist, in dem eine Vielzahl von halb geschlossenen Aussparungen (30) angebracht sind, welche von einem Statorjoch (32) begrenzt werden und induzierte Wicklungen (28) aufnehmen und der mit dem Rotor (18) einen Luftspalt (22) bildet, dadurch gekennzeichnet, dass das Verhältnis $r_1$ der Höhe (h) des vom Induktionsfluss durchquerten Magnetquerschnitts, geteilt durch den Bohrungsdurchmesser (d) des Luftspaltes zwischen 0,281 und 0,344 beträgt.

2. Maschine nach Anspruch 1
dadurch gekennzeichnet, dass das Verhältnis $r_1$ gleich 0,3125 ist.

3. Maschine nach einem der Ansprüche 1 oder 2,
dadurch gekennzeichnet, dass das Verhältnis $r_2$ der Länge (a) eines Polumfangshalbbogens des Rotors welcher die einander gegenüberliegenden Flächen zweier aufeinanderfolgender Magneten trennt, geteilt durch die Höhe (h) des von einem Induktionsfluss durchquerten Magnetquerschnitts zwischen 0,588 und 0,741 beträgt.

4. Maschine nach Anspruch 3,
dadurch gekennzeichnet, dass das Verhältnis $r_2$ gleich 0,658 beträgt.

5. Maschine nach irgendeinem der Ansprüche 1 bis 4,
dadurch gekennzeichnet, dass das Verhältnis $r_3$ des Produktes der Anzahl von Statorzähnen (n), welche die Statoraussparungen trennen, mal der Dicke eines Statorzahnes (e), der zwei aufeinanderfolgende Aussparungen trennt, geteilt durch zwölfmal die Länge (a) eines Polumfangshalbbogens des Rotors, welcher die einander gegenüberliegenden Flächen zweier aufeinanderfolgender Magneten trennt, zwischen 0,55 und 0,70 beträgt.

6. Maschine nach Anspruch 5,
dadurch gekennzeichnet, dass das Verhältnis $r_3$ gleich 0,62 ist.

7. Maschine nach einem der Ansprüche 1 bis 6,
dadurch gekennzeichnet, dass das Verhältnis $r_4$ von zwölfmal der radialen Dicke (c) des Statorjochs, geteilt durch das Produkt der Anzahl (n) der Statorzähne, welche die Statoraussparungen trennen mal der Dicke (e) eines Statorzahns, welcher zwei aufeinanderfolgende Aussparungen trennt, zwischen 0,75 und 0,90 beträgt.

8. Maschine nach Anspruch 7,
dadurch gekennzeichnet, dass das Verhältnis $r_4$ gleich 0,824 ist.

9. Maschine nach irgendeinem der Ansprüche 1 bis 8,
dadurch gekennzeichnet, dass die Anzahl der Statorzähne (n), welche die Statoraussparungen trennen, gleich 36 ist.

induced coils (28), and which defines an airgap (22) with the rotor (15), characterized in that the ratio $r_1$ the height (h) of the cross-section of a magnet through which the induction flux flows divided by the bore diameter (d) of the airgap is between 0.281 and 0.344.

2. Machine according to claim 1, characterized in that the ratio $r_1$ is equal to 0.3125.

3. Machine according to one of claims 1 or 2, characterized in that the ratio $r_2$ of the length (a) of a peripheral pole semi-arc of the rotor separating the opposite faces of two consecutive magnets, divided by the height (h) of the cross-section of a magnet through which the induction flux flows, is between 0.588 and 0.741.

4. Machine according to claim 3, characterized in that the ratio $r_2$ is equal to 0.658.

5. Machine according to one of claims 1 to 4, characterized in that the ratio $r_3$ between the product of the number of stator teeth (n) separating the stator notches multiplied by the thickness of a stator tooth (e) separating two consecutive notches, divided by twelve times the length (a) of a peripheral pole semi-arc of the rotor separating the opposite faces of two consecutive magnets is between 0.55 and 0.70.

6. Machine according to claim 5, characterized in that the ratio $r_3$ is equal to 0.62.

7. Machine according to any one of claims 1 to 6, characterized in that the ratio $r_4$ of twelve times the radial thickness (c) of the stator yoke divided by the product of the number (n) of stator teeth separating the stator notches multiplied by the thickness (e) of a stator tooth separating two consecutive notches is between 0.75 and 0.90.

8. Machine according to claim 7, characterized in that the ratio $r_4$ is equal to 0.824.

9. Machine according to any one of claims 1 to 8, characterized in that the number os stator teeth (n) separating the stator notches is equal to 36.

## Claims

1. Synchronous six-pole electrodynamic machine with permanent magnets (44) comprising a rotor (18) of the flux 5 concentration type having a shaft (36) made from an amagnetic material on which rest six parallelepipedic radial permanent magnets (44) of high energy type between which the pole pieces (34) are disposed which are made from magnetic ferrosilicon metal sheet and a stator (14) comprising a carcase made from ferrosilicon magnetic metal beet in which a plurality of semi-closed notches (30) are formed defined by a stator yoke (32) which receive

FIG.1

FIG.2